# EUROPEAN PATENT SPECIFICATION

(11) **EP 3 308 653 B1**
(45) Date of publication and mention of the grant of the patent: **18.09.2019**
(21) Application number: 17195461.3
(22) Date of filing: 09.10.2017
(51) Int. Cl.: A23L 3/3481

(54) **COMPOSITION FOR PRESERVING FOOD PRODUCTS**
ZUSAMMENSETZUNG ZUR KONSERVIERUNG VON NAHRUNGSMITTELPRODUKTEN
COMPOSITION POUR CONSERVER DES PRODUITS ALIMENTAIRES

(30) Priority: 13.10.2016 IT 201600102637
(43) Date of publication of application: 18.04.2018
(73) Proprietor: Alithea S.R.L., 20020 Busto Garolfo (MI) (IT)
(72) Inventor: RONDANINI, Andrea, 21053 CASTELLANZA VA (IT); RONDANINI, Marco Alberto, 20900 MONZA (IT)
(74) Representative: Modiano, Micaela Nadia

(56) References cited:
- FR-A1- 2 866 564
- US-A- 3 732 112
- US-A- 4 191 783
- US-A- 4 446 161
- US-A1- 2011 152 383

## Description

The present invention relates to a composition for preserving food products from microbial contaminations, allowing their preservation over time.

Food preservation is one of the fundamental processes of the transformation of food products, performed by mankind since the earliest times. The goal of food preservation is to preserve over time (a few days to a few years, depending on the products) their edibility, preventing their alterations (putrefaction, becoming rancid, etc.) caused by contamination on the part of microorganisms such as yeasts, bacteria and molds. The possibility to preserve foods is fundamentally important in substantially all sectors of the food industry and affects products intended both for human consumption and for animal consumption (pet foods and feeds).

One strategy for avoiding (or at least delaying) the growth of microorganisms in food products is the addition of preservatives such as sorbic acid, propionic acid, and their respective salts. This method finds application in particular for so-called "intermediate moisture food", IMF), characterized by a residual humidity (HU) between 15% and 40% and a water activity (AW) between 0.60 and 0.98. Intermediate moisture foods are subjected mostly to the forming of molds.

As is known, in the food sector residual humidity indicates the percentage of water that is present in a food; generally, foods with high residual humidity are subjected to microbial contaminations in short times. Water activity instead expresses the ratio between the vapor pressure of the water in a food and the vapor pressure of pure water at the same temperature: this is a dimensionless quantity the value of which is comprised between 0 and 1. Water activity is an index of the amount of water which, in a food product, is free from bonds with other components of the food product and is therefore available for chemical or biological reactions that can lead to the decomposition of the product. It is therefore one of the main parameters that indicates the possibility of the development of contaminations, which is higher as the value of AW approaches 1.

It should be noted that food products having an equal HU can have very different AW values and therefore a different tendency to perish. This occurs, for example, when the products have a different content of sugars or other substances capable of bonding water molecules, thus lowering AW.

Another solution for preserving foods, which offers the advantage of not altering directly the composition of the food products by adding preservatives, is to modify the composition of the air that is present in the so-called "head space" of the package of the products, i.e., the space between the food and the container. By replacing the air in the head space with the so-called "modified atmosphere" (a mixture of carbon dioxide and nitrogen in defined percentages), the presence of atmospheric oxygen inside the package is reduced, thus inhibiting the growth of microorganisms and the onset of oxidation reactions affecting the food.

Another method that is commonly used to limit the growth of microorganisms in food products is to vaporize ethyl alcohol in the head space of the packages of the products. Generally, mixtures based on ethical alcohol and one or more aromatizing substances are used instead of pure ethyl alcohol: ethyl alcohol performs the antimicrobial action and at the same time acts as a solvent of the aromatizing substances, which, selected appropriately, cover the odor of ethyl alcohol and aromatize the product with a pleasant fragrance that resembles that of the product itself. Ethyl alcohol (or the mixture that comprises it) can also be incorporated directly within the food: one example is the alcohol soak, which comprises ethyl alcohol, saccharose and aromatic substances, commonly used in confectionery, for example to soften sponge cake sheets or cake mix. This soak conveys the ethyl alcohol into the food product, thus offering an antimicrobial protection to the resulting packaged product. The use of ethyl alcohol, however, has some disadvantages: first of all, if ingested in large quantities it has a neurotoxic action; furthermore, its presence in the formulation of food products compromises the possibility of consumption of these products on the part of children, hypersensitive subjects and/or subjects who comply with religious or cultural prescriptions which forbid its ingestion. The trade and consumption of food products with added ethyl alcohol therefore does not have a widespread diffusion on a global level.

Another approach for preserving foods is to lower their pH to acidity values, in particular to values between 4.0 and 5.5, at which microbial growth is slowed down. PH reduction is obtained by means of organic acids or salts thereof suitable for the food sector: sodium acetate, acetic acid, lactic acid are the ones most commonly used. The further addition of sorbic acid and/or propionic acid (or salts thereof) further slows microbial growth to the point of inhibiting it, as a consequence of the increase in concentration of undissociated acid forms, which have an inhibiting activity on microorganism growth. However, numerous food preparations cannot be acidified to such a point as to obtain an effective preserving action. Acidifying the matrix of sponge cake, for example, which has a pH of approximately 7, would modify its physical structure in addition to causing variations in the organoleptic and therefore qualitative characteristics of the product. On the other hand, at pH values close to neutrality classic preservatives (such as sorbic acid, propionic acid or salts thereof) are less effective, due to a low concentration of the undissociated acid forms, with a consequent increase in the possibility to grow microorganisms.

Since, as mentioned earlier, high values of water activity (AW) are associated with a high risk of microbial contamination, it is possible to introduce in food products substances which reduce AW, respecting the final organoleptic qualities of the products themselves. These substances typically include some sugars, such as saccharose, modified starches and substances having a humectant action such as glycerol, sorbitol, propylene glycol. However, not all foods can receive the addition of the substances cited above in such quantities as to reduce their AW to values at which microbial growth is effectively inhibited, on penalty of the loss of their organoleptic properties. In such cases, the values of AW remain high (often higher than 0.85), with the consequent predisposition of the food to the growth of microorganisms, particularly molds.

US 3,732,112 (1973) teaches that the addition of one or more 1,3 aliphatic diols with a linear chain having a length between 4 and 15 carbon atoms, or esters thereof, at concentrations comprised between 0.05% and 50% on the weight of the food, is capable of preventing the growth of microorganisms in food products having a residual humidity between 20% and 60%, a water activity between 0.50 and 0.90, and a pH between 3.5 and 8.0. The solution proposed by US 3,732,112, however, is not free from drawbacks: first of all, even if used at high concentrations (20-25%), 1,3 aliphatic diols alone are not always sufficiently effective in mold growth prevention; on the contrary, in some cases it is necessary to use additional antimycotic agents, such as 1,2 diols, sorbic acid, propionic acid or respective salts thereof, as described in US 4,191,783. Diols having the hydroxyl groups in position 1,2 in fact have a higher antimicrobial effect with respect to diols having the hydroxyl groups in position 1,3 (Antoce et al., Netsu Sokutei Vol. 25 (1), 1998, p. 2-8; Aono et al., Netsu Sokutei Vol. 26 (1), 1999, p. 2-8). Furthermore, 1,3 aliphatic diols with a chain that is 4-15 C atoms long give food products a bitter taste which, in some kinds of foods, is unwanted. This bitter taste becomes unpleasant at 1,3 diol concentrations higher than 3.5% by weight on the total weight of the food, until it is intolerable at concentrations higher than 5% by weight. A consequence of this is that 1,3 diols can be used at concentrations that do not exceed 2.5% by weight on the weight of the food product.

In the field of food preservation it is also known (US 4,446,161) to use monohydric aromatic alcohols in order to increase the resistance to the proliferation of bacteria, molds and yeasts in food products with a residual humidity between 12% and 80%. However, monohydric aromatic alcohols have particularly strong characteristic flavors and odors, which alter the aroma and organoleptic properties of the products to which they are added, even if they are used at low concentrations.

FR 2 866 564 discloses an antiseptic disinfectant for a food product comprising 1,2-alkanediol having 5-10 carbons and a terpin-4-ol and/or linalool compound.

US 2011/152383 discloses an antimicrobial composition comprising or consisting of (a) at least one benzyl alcohol derivative which is most preferably 4-methylbenzyl alchohol and (b) at least one antimicrobial active compound which is most preferably a 1,2-alkanediol having 3 to 14 carbon atoms.

In view of what has been described so far, it is clear that a unique method that allows to preserve foods (especially intermediate moisture foods) against microbial proliferation for periods of time of several months, independently of parameters such as water activity and/or pH of the foods themselves and at the same time has a neutral impact on the organoleptic characteristics of these foods does not yet exist.

The aim of the present invention is therefore to provide a composition for the preservation of food products that overcomes the limitations and drawbacks of the formulations known in the background art.

Within this aim, an object of the invention is to provide a composition that allows the preservation of food products of various kinds and having different physical characteristics. In particular, an object of the present invention is to provide a composition that allows the preservation of food products regardless of their percentage content of residual humidity (HU). Another object of the invention is to provide a composition that is capable of ensuring the preservation of food products have a high water activity, even higher than 0.85. Another object of the present invention is to provide a composition that allows the preservation of food products regardless of their pH value.

Another object of the invention is to provide a composition that allows the preservation of food products for a longer time with respect to the maximum preservation time that can be achieved by means of currently known methods, except for freezing, deep freezing or sterilization methods.

Moreover, an object of the present invention is to provide a composition for the preservation of food products that is safe for human and animal nutrition and does not give an unpleasant taste to foods.

Another object of the invention is to provide a composition that is highly reliable and effective and the provision of which is simple and entails competitive costs.

This aim, as well as these and other objects which will become better apparent hereinafter, are achieved by a composition for preserving food products, comprising:
(i) from 85% to 97% by weight on the total weight of the composition of one or more aliphatic diols or esters thereof selected from the group consisting of: 1,3 diols and a mixture of 1,3 diols and 1,2 diols; and
(ii) from 3% to 15% by weight on the total weight of the composition of one or more compounds selected from the group consisting of: monohydric aromatic alcohols, terpenes, terpenoids, guaiacols, phenols, diphenols, coumarins, anthraquinones, flavones, flavonoids, phenolic acids and derivatives thereof, hydroxycinnamic acids and derivatives thereof, and mixtures thereof.

This aim and these and other objects are also achieved by the use of the composition according to the invention for the preservation of a food product by incorporation of said composition in the food product in an amount between 0.2% and 8% by weight on the final weight of the food product.

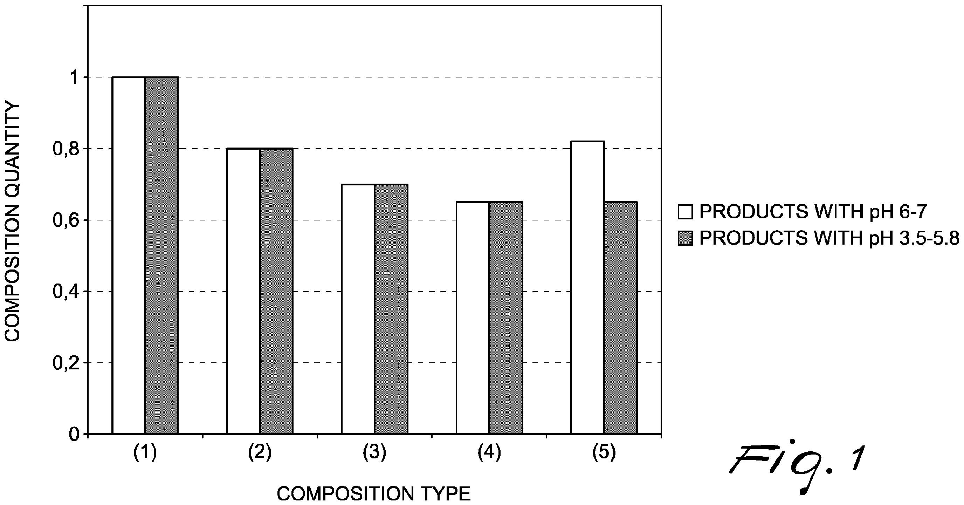

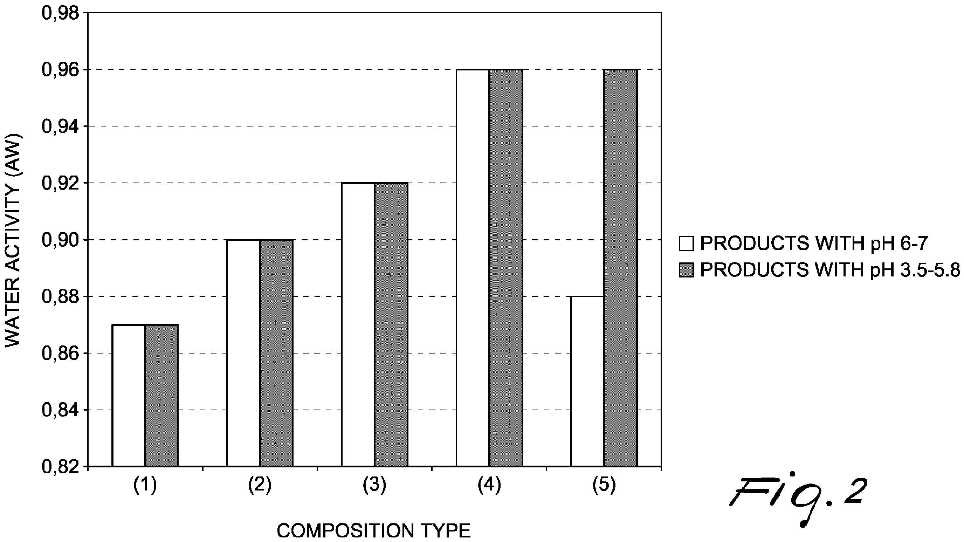

Further characteristics and advantages of the invention will become better apparent from the detailed description provided hereinafter. The invention is also illustrated by way of nonlimiting example by the accompanying Figures 1 and 2, wherein:
Figure 1 is a first histogram which compares the effectiveness of compositions according to the invention and comparative compositions;
Figure 2 is a second histogram which compares the effectiveness of compositions according to the invention and comparative compositions.

In the presence text, the term "microbial" is understood to reference microorganisms in general, among which mention is made, by way of example, of bacteria, yeasts, fungi, molds. Furthermore, in the present text the expressions "food product" and "food" are used as synonyms and interchangeably.

It has been mentioned that a first aspect of the present invention relates to a composition for the preservation of food products which comprises one or more aliphatic diols or esters thereof and one or more other compounds. Preferably, the aliphatic chain of these diols can be linear. The 1,3 aliphatic diols that are present in the composition according to the invention can have a linear chain with a length preferably between 4 and 15 carbon atoms, and more preferably between 4 and 10 carbon atoms; the 1,2 aliphatic diols can have a linear chain with a length preferably between 2 and 12 carbon atoms and more preferably between 3 and 10 carbon atoms.

When the composition according to the invention comprises a mixture of 1,3 diols or esters thereof and of 1,2 diols or esters thereof, said mixture can be preferably constituted by: 1,3 aliphatic diols or esters thereof in an amount between 80% and 90% and 1,2 aliphatic diols or esters thereof in an amount between 10% and 20%; more preferably, said mixture can be constituted by 1,3 aliphatic diols or esters thereof in an amount equal to 85% and of 1,2 aliphatic diols or esters thereof in an amount equal to 15% (the percentages are expressed by weight on the total weight of the mixture of 1,3 diols and 1,2 diols).

Furthermore, the presence of the diols in the composition according to the invention is preferable with respect to the presence of the esters of the diols.

The monohydric aromatic alcohols that are present in the composition according to the invention can be, for example, benzylic alcohol, 2-phenyl-ethanol, sec-phenyl-ethanol, 1-phenyl-1-propanol, 2-phenyl-1-propanol, 3-phenyl-1-propanol, 2-phenyl-2-propanol, 1-phenyl-2-butanol, 2-phenyl-1-butanol, 3-phenyl-1-butanol, 4-phenyl-1-butanol, 4-phenyl-2-butanol, 1-phenyl-2-pentanol, 5-phenyl-1-pentanol, and mixtures thereof.

The terpenes (biomolecules containing repetitions of the isoprene unit) and terpenoids (terpenes with functional groups containing heteroatoms) that can be present in the composition according to the invention are for example limonene, menthol, squalene, geraniol, carvacrol.

Among guaiacols, it is possible to mention by way of example eugenol, the compound which gives clove essential oil its characteristic fragrance.

Among phenols (or diphenols) that can be present in the composition there are, for example, thymol, p-cresol, 1,2-dihydroxybenzene, 1,3-dihydroxybenzene, 1,4-dihydroxybenzene, 3-ethylphenol.

An example of coumarin that can be present in the composition according to the invention is scopoletin; among anthraquinones, emodin can be present for example.

Flavones and flavonoids can be present in the composition according to the present invention also in their glycoside form; an example of flavonoid is cinnamaldehyde.

Among the phenolic acids that can be present in the invention there are, for example, benzoic acid, vanillic acid, gallic acid, syringic acid, ellagic acid, salicylic acid.

As examples of hydroxycinnamic acids that can be present in the composition there are p-coumaric acid, caffeic acid, ferulic acid, sinapic acid, phenylpropionic acid.

Of course, diols, monohydric aromatic alcohols, terpenes, terpenoids, guaiacols, phenols, diphenols, coumarins, anthraquinones, flavones, flavonoids, phenolic acids and derivatives thereof, hydroxycinnamic acids and derivatives thereof present in the composition according to the invention must be suitable for food use: the person skilled in the art is easily able to identify compounds of the families mentioned above that are suitable for use in the food sector, in addition to the ones mentioned above explicitly by way of example.

In a preferred embodiment, the composition can comprise 88% to 95% by weight on the total weight of the composition of one or more aliphatic diols or esters thereof and 5% to 12% by weight on the total weight of the composition of the one or more compounds indicated above.

It has been found that monohydric aromatic alcohols, terpenes, terpenoids, guaiacols, phenols, diphenols, coumarins, anthraquinones, flavones and flavonoids are particularly advantageous in the composition according to the invention: these compounds are in fact effective in their antimicrobial action in an extremely broad pH interval, which comprises the pH of substantially all the foods that are consumed by man or by human beings and require a supplement for their preservation. Accordingly, the compositions that comprise 3-15% by weight of one or more compounds among the ones listed above are capable of performing the effect of preserving the food products in which they are incorporated regardless of the pH value of said food products. Therefore, in a preferred embodiment the composition according to the invention can comprise:
(i) from 85% to 97% by weight on the total weight of the composition of one or more aliphatic diols or esters thereof selected from the group consisting of: 1,3 diols and a mixture of 1,3 diols and 1,2 diols; and
(ii) from 3% to 15% by weight on the total weight of the composition of one or more compounds selected from the group consisting of: monohydric aromatic alcohols, terpenes, terpenoids, guaiacols, phenols, diphenols, coumarins, anthraquinones, flavones, flavonoids, and mixtures thereof.

Differently, phenolic acids (and their derivatives) and hydroxycinnamic acids (and their derivatives) perform an antimicrobial action in conditions of acidity, in particular at pH values between 3.5 and 5.8: at higher pH values, the acids occur in a dissociated form, which is scarcely active especially against inhibition of the growth of molds. For this reason, the compositions according to the invention that comprise 3-15% of phenolic acids, hydroxycinnamic acids, derivatives thereof or mixtures thereof allow preservation of food products the pH of which is between 3.5 and 5.8.

From what was mentioned earlier, the composition according to the invention can comprise both one or more compounds the antimicrobial action of which is independent of the pH (monohydric aromatic alcohols, terpenes, terpenoids, guaiacols, phenols, diphenols, coumarins, anthraquinones, flavones, flavonoids, or mixtures thereof) and one or more active compounds with a pH between 3.5 and 5.8 (phenolic acids, hydroxycinnamic acids, derivatives thereof or mixtures thereof), in a total percentage comprised between 3% and 15%. Therefore, as can be understood immediately by the person skilled in the art, the compositions that comprise both types of compound (pH-independent and pH-dependent) have a behavior that is intermediate between the two extremes, depending on the relative percentages in which these two types of compound are present within the total content of 3-15% by weight on the total weight of the composition.

The composition according to the invention can further comprise other ingredients that can be mixed therein, even if they lack an antimicrobial action: for example, the composition can further comprise glycerol, glucose syrups, substances having an aromatic action which give the food product in which the composition is incorporated a pleasant fragrance and/or taste or enhance the fragrance and/or taste of the food product. It is understood that the percentage ratios among the active ingredients indicated expressly above must remain such, regardless of the presence of any additional ingredients.

The composition according to the invention is in liquid form at ambient temperature and is incorporated in foods in this form. However, it can also be added to inert powdery matrices (i.e., lacking antimicrobial function) which modify its physical form from liquid to powdery in order to allow its incorporation in foods for which it is preferable to use this powder form.

The preparation of the composition according to the invention occurs by simple mixing of the components and can be performed by the person skilled in the art without the need for specific procedural indications. In particular, since all the components can be easily mixed together, the preparation of the composition is simple and is not subject to variations in its result depending for example on the operating temperature and/or on the technological processes used in its preparation.

In another aspect, the invention relates to the use of the composition described herein for the preservation of a food product; the composition can be incorporated in the food product in an amount between 0.2% and 8% by weight on the final weight of the food product.

Preferably, the composition can be incorporated in the food product in an amount between 0.2% and 5% by weight on the final weight of the food product, more preferably in an amount between 0.2% and 2.5%.

The composition according to the invention can be used for the preservation of food products of various kinds and preferably for the preservation of food products having a residual humidity (HU) between 15 and 40%, i.e., foods generally known in the field as "Intermediate Moisture Food" (IMF).

Furthermore, the composition of the invention can be used preferably to preserve food products that have a water activity (AW) between 0.60 and 0.98, more preferably between 0.80 and 0.96. In a preferred embodiment of the invention, the composition can be used to preserve for example farinaceous products, particularly bakery products (bread, crackers, breadsticks, crispbread, piadinas, puffs and bread replacements in general), products based on cereals, polenta, dough for pizza or focaccia, puff pastry, short butter dough or the like, confectionery products such as biscuits, brioches, snacks, desserts, cake bases, sponge cake, sugar confectionery products, sweet food creams, jams, marmalades and compotes, fruit and vegetables in pieces, food-grade jellies for topping, flavored syrups, fresh pasta, even in the form of gnocchi, ravioli or another kind of pasta with filling, mixes or fillings (for example for pasta or for meats), cheese (whole wheels, sliced cheeses, melted cheeses, spreadable or creamy cheeses), yogurt, salty sauces (mayonnaise, mustard, ketchup, etc.), fish-based products, surrogates of fishery products, additives for the preparation of finished foods such as emulsions of fats or natural aromas.

Therefore, another aspect of the present invention relates to a food product that comprises the composition according to the invention. In one embodiment, said food product can have a residual humidity (HU) between 15 and 40%. In another embodiment, said food product can have a water activity (AW) between 0.60 and 0.98, more preferably between 0.80 and 0.96. Furthermore, said product can be preferably for example a farinaceous product, particularly a bakery product (bread, crackers, breadsticks, crispbread, piadinas, puffs and bread replacements in general), a product based on cereals, polenta, dough for pizza or focaccia, puff pastry, short butter dough or the like, a confectionery product such as biscuits, brioches, snacks, desserts, cake bases, sponge cake, a sugar confectionery product, a sweet food cream, jam, marmalade and compote, fruit and vegetables in pieces, food-grade jelly for topping, a flavored syrup, fresh pasta, even in the form of gnocchi, ravioli or another kind of pasta with filling, a mix or filling (for example for pasta or for meats), a cheese (whole wheel, sliced cheese, melted cheese, spreadable or creamy cheeses), a yogurt, a salty sauce (mayonnaise, mustard, ketchup, etc.), a fish-based products, a surrogate of fishery products, an additive for the preparation of finished foods such as an emulsion of fats or a natural aroma.

The effectiveness of the composition according to the invention has been assessed by examining stability to microbial contamination (reference hereinafter also as "antimicrobial stability)", i.e., the absence of growth of colonies of microorganisms) of a series of food products of the "intermediate moisture food" (IMF) type 180 days after the incorporation, in said products, of various embodiments of the composition according to the invention. IMFs of various kinds among the ones listed above have been used, all having a residual humidity (HU) between 15% and 40% and a water activity (AW) between 0.60 and 0.98. In addition to the compositions according to the invention, compositions known in the background art and comprising only 1,3 diols or mixtures of 1,3 diols and 1,2 diols have also been examined for the purpose of comparison.

With reference to the histograms shown in Figures 1 and 2, the examined compositions, referenced by the numerals (1) to (5), are respectively the following:
(1) compositions comprising one or more 1,3 diols with a linear chain having a length between 4 and 15 carbon atoms (comparative);
(2) compositions comprising a mixture of one or more 1,3 diols with a linear chain having a length between 4 and 15 carbon atoms and one or more 1,2 diols with a linear chain having a length between 2 and 10 carbon atoms, in different weight ratios between 1,3 diols and 1,2 diols (comparative);
(3) compositions comprising a mixture of 1,3 diols and 1,2 diols and one or more compounds selected from the group constituted by terpenes, terpenoids, guaiacols, phenols, diphenols, coumarins, anthraquinones, flavones and flavonoids, according to the invention;
(4) compositions comprising a mixture of 1,3 diols and 1,2 diols and one or more monohydric aromatic alcohols according to the invention;
(5) compositions comprising a mixture of 1,3 diols and 1,2 diols and one or more compounds selected from the group constituted by phenolic acids and derivatives thereof and hydroxycinnamic acids and derivatives thereof, according to the invention.

The data given in the histograms represent an average of the results obtained on various food products and by using different compositions as described above.

The histogram of Figure 1 shows the relative quantities of compositions (1)-(5) that are necessary to obtain 180-day antimicrobial stability of the IMFs used in the tests. The tests were conducted on IMFs with a pH of 6-7 and on IMFs with a pH of 3.5-5.8, in order to assess the influence of pH on the effectiveness of the various compositions: the results are shown as two distinct columns, at each of the compositions (1)-(5).

The percentage quantity (by weight on the final weight of the food product) of composition (1) necessary to obtain 180-day antimicrobial stability of the product has been set to 1, and the relative quantities of compositions (2)-(5) necessary to achieve the same result have been assessed.

First of all, the tests performed by the inventors have confirmed that 1,2 diols have a superior antimicrobial activity with respect to 1,3 diols: the compositions (2), which are mixtures of 1,3 diols and 1,2 diols at concentrations that can vary with respect to each other, in fact ensure antimicrobial stability of IMFs for 180 days at a percentage quantity that is 20% lower than the quantity of compositions (1), which contain only 1,3 diols, as can be observed from the height of the corresponding columns of the histogram of Figure 1.

The compositions (4) belong to the present invention and comprise mixtures of 1,3 diols and 1,2 diols and aromatic monohydric alcohols. As can be seen from the histogram, these compositions ensure antimicrobial stability of IMFs for 180 days at a percentage quantity that is 35% lower than the quantity of compositions (1) and 15% lower than the quantity of compositions (2).

The compositions (3) also belong to the invention and comprise a mixture of 1,3 diols and 1,2 diols and one or more compounds selected from the group constituted by terpenes, terpenoids, guaiacols, phenols, diphenols, coumarins, anthraquinones, flavones and flavonoids. The compositions of type (3) have demonstrated a slightly lower effectiveness with respect to compositions of type (4): as can be seen from the heights of the corresponding columns in the histogram of Figure 1, a quantity of compositions (3) that is slightly higher than that of compositions (4) is in fact necessary in order to obtain antimicrobial stability at 180 days.

Since the compositions according to the invention of types (3) and (4), as well as the comparative compositions of types (1) and (2), are not affected by the pH of the food product in which they are incorporated, the tests performed on IMFs with pH 6-7 and on IMFs with pH 3.5-5.8 have yielded similar results, as demonstrated by the equal height of the two columns shown in Figure 1 for each one of compositions (1)-(4).

The compositions of type (5) according to the invention comprise a mixture of 1.3 diols and 1.2 diols and one or more compounds selected from the group constituted by phenolic acids, hydroxycinnamic acids and derivatives thereof. As mentioned, these compositions are effective in performing an antimicrobial action at pH values comprised between 3.5 and 5.8, while are they are less active at higher pH values. In the histogram of Figure 1 one can in fact notice the different height of the columns that correspond to the tests performed with compositions of type (5) on IMFs with pH 6-7 and on IMFs with pH 3.5-5.8; these compositions have an effectiveness that is comparable to that of compositions (3) and (4) according to the invention in the preservation of IMFs having a pH of 3.5-5.8, while they are less effective for the preservation of IMFs having a pH of 6-7: in this case, the desired preservation effect is obtained by using a quantity of composition that is approximately equal to that of the comparative compositions of type (2).

The inventors have also performed tests aimed at evaluating the effectiveness of the compositions (1)-(5) listed above with reference to the water activity (AW) of the food products (IMF) in which they are incorporated; the results obtained are shown schematically in the histogram of Figure 2, where the water activity of the IMFs being considered is indicated on the axis of ordinates. As mentioned, water activity is a crucial parameter for the growth of colonies of microorganisms: the closer to 1 the water activity of a food, the more it is susceptible of microbial attack (in the in particular on the part of molds).

As can be seen from Figure 2, the tests performed have indicated first of all that the compositions (1) containing only 1.3 diols, used in quantities between 1 and 8% by weight on the final weight of the food product, ensure the antimicrobial stability for 180 days of said product, provided that its water activity does not exceed 0.87. Likewise, the compositions (2) containing mixtures of 1.3 diols and 1.2 diols used in quantities between 1 and 8% by weight on the final weight of the food product ensure antimicrobial stability for 180 days of the product, provided that its water activity does not exceed 0.90.

However, many IMFs have a water activity of more than 0.90 and cannot be preserved for 180 days except by using concentrations of diols that prevent their edibility. The compositions (3), (4) and (5) according to the invention, incorporated in the IMFs in amounts between 0.2% and 8% by weight on the final weight of the food product, are instead capable of rendering stable to microbial attack for 180 days even IMFs with a water activity up to 0.96.

Even in this test aimed at evaluating the effectiveness of the compositions in relation to the AW of foods, it is noted that the compositions of type (1), (2), (3), and (4), which as mentioned are not affected by the pH of the product in which they are incorporated, lead to the same results both when used with IMFs having a pH of 6-7 and with IMFs having a pH of 3.5-5.8, as indicated by the equal height of the two columns plotted in Figure 2 for each of the compositions (1)-(4). The compositions of type (5) according to the invention, which are active only at pH 3.5-5.8, instead show a different effect on depending on whether they are used with IMFs having a pH of 6-7 or with IMFs having a pH of 3.5-5.8. In fact, when they are incorporated in IMFs having a pH of 6-7, the compositions of type (5) are capable of ensuring their antimicrobial stability for 180 days only if the water activity of these IMFs does not exceed 0.88. When instead they are incorporated in IMFs having a pH of 3.5-5.8, the compositions of type (5) ensure their antimicrobial stability for 180 days even if the water activity has values equal to 0.96, as can be noticed from the histogram of Figure 2, at the compositions (5).

In view of the above, in practice it has been found that the invention described herein achieves fully the intended aim and objects.

The composition described herein in fact allows to preserve food products regardless of their percentage content of residual humidity (HU), revealing itself to be particularly suitable for the preservation of intermediate moisture products (IMF), which have an HU between 15% and 40%, which represent a significant part of the long-life products that are commercially available. Furthermore, the composition according to the invention allows the preservation of food products that have a particularly high water activity (AW), up to 0.96; since, as is known, the AW of a food increases as the temperature at which the product is kept increases, the composition according to the invention therefore allows the preservation of food products at ambient temperature and more generally at temperatures up to 30°C. Moreover, the invention described herein, in its various embodiments, allows to preserve food products that have different pH values, acid, neutral or basic, by means of the selection of the components of the composition according to the acidity of the food.

The invention is furthermore capable of rendering the food products in which it is incorporated resistant to microbial attack for longer periods than the preservative compositions known in the background art, in particular up to 180 days. Finally, the invention ensures antimicrobial stability of foods that have high water activity, particularly susceptible to contamination on the part of molds, despite not using preservatives having a specifically antimycotic action such as ascorbic acid or propionic acid and salts thereof. The composition described herein is furthermore free from ethyl alcohol, a characteristic which renders it useful for the preservation of products intended for the consumption of children, sensitive subjects or subjects who in any case do not wish to ingest this substance.

It should be understood that the characteristics of the embodiments described with reference to an aspect of the present invention are to be considered valid, where applicable, also with reference to the other aspects of the invention described herein, even if these characteristics have not been repeated explicitly.

The composition according to the invention, conceived as described herein, is susceptible of numerous modifications and variations, all of which are within the scope of the inventive concept: all the details may furthermore be replaced with other equivalent elements the correspondence of which is known to the person skilled in the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A composition for preserving food products, comprising:
(i) from 85% to 97% by weight on the total weight of the composition of one or more aliphatic diols or esters thereof selected from the group consisting of: 1,3 diols and a mixture of 1,3 diols and 1,2 diols; and
(ii) from 3% to 15% by weight on the total weight of the composition of one or more compounds selected from the group consisting of: monohydric aromatic alcohols, terpenes, terpenoids, guaiacols, phenols, diphenols, coumarins, anthraquinones, flavones, flavonoids, phenolic acids and derivatives thereof, hydroxycinnamic acids and derivatives thereof, and mixtures thereof.

2. The composition according to claim 1, comprising:
(i) from 85% to 97% by weight on the total weight of the composition of one or more aliphatic diols or esters thereof selected from the group consisting of: 1,3 diols and a mixture of 1,3 diols and 1,2 diols; and
(ii) from 3% to 15% by weight on the total weight of the composition of one or more compounds selected from the group consisting of: monohydric aromatic alcohols, terpenes, terpenoids, guaiacols, phenols, diphenols, coumarins, anthraquinones, flavones, flavonoids, and mixtures thereof.

3. The composition according to claim 1 or claim 2, wherein said 1,3 aliphatic diols have a linear chain with a length between 4 and 15 carbon atoms.

4. The composition according to any one of the preceding claims, wherein said 1,2 aliphatic diols have a linear chain with a length between 2 and 12 carbon atoms.

5. The composition according to any one of the preceding claims, wherein said one or more aliphatic diols or esters thereof are a mixture consisting of 1,3 aliphatic diols or esters thereof in an amount between 80% and 90% and 1,2 aliphatic diols or esters thereof in an amount between 10% and 20% by weight on the total weight of said mixture.

6. The composition according to any one of the preceding claims, comprising from 88% to 95% by weight on the total weight of the composition of said one or more aliphatic diols or esters thereof and from 5% to 12% by weight on the total weight of the composition of said one or more compounds.

7. Use of the composition according to any one of claims 1-6 for the preservation of a food product by incorporation of said composition in the food product in an amount between 0.2% and 8% by weight on the final weight of the food product.

8. The use according to claim 7, wherein the food product has a residual humidity (HU) between 15% and 40%.

9. The use according to claim 7 or claim 8, wherein the food product has a water activity (AW) between 0.60 and 0.98.

10. The use according to any one of claims 7-9, wherein the food product is selected from the group consisting of: farinaceous products, preferably bakery products, products based on cereals, polenta, pizza dough, focaccia dough, puff pastry, short butter dough, confectionery products, sugar confectionery products, sweet food creams, jams, marmalades and compotes, fruit and vegetables in pieces, food-grade jellies for topping, flavored syrups, fresh pasta, filled pasta, doughs, fillings, cheeses, yogurts, salty sauces, fish-based products, surrogates of fishery products, emulsions of fats, natural aromas.

11. A food product comprising the composition according to any one of claims 1-6.

## Patentansprüche

1. Eine Zusammensetzung zur Konservierung von Lebensmittelprodukten, die Folgendes umfasst:
(i) 85 bis 97 Gewichtsprozent, bezogen auf das Gesamtgewicht der Zusammensetzung, eines oder mehrerer aliphatischer Diole oder Ester davon, gewählt aus der Gruppe bestehend aus 1,3-Diolen und einer Mischung aus 1,3-Diolen und 1,2-Diolen; und
(ii)3 bis 15 Gewichtsprozent, bezogen auf das Gesamtgewicht der Zusammensetzung, einer oder mehrerer Verbindungen, gewählt aus der Gruppe bestehend aus einwertigen aromatischen Alkoholen, Terpenen, Terpenoiden, Guajacolen, Phenolen, Diphenolen, Cumarinen, Anthrachinonen, Flavonen, Flavonoiden, Phenolsäuren und Derivaten davon, Hydroxyzimtsäuren und Derivaten davon, und Mischungen davon.

2. Die Zusammensetzung gemäß Anspruch 1, die Folgendes umfasst:
(i)85 bis 97 Gewichtsprozent, bezogen auf das Gesamtgewicht der Zusammensetzung, eines oder mehrerer aliphatischer Diole oder Ester davon, gewählt aus der Gruppe bestehend aus 1,3-Diolen und einer Mischung aus 1,3-Diolen und 1,2-Diolen; und
(ii)3 bis 15 Gewichtsprozent, bezogen auf das Gesamtgewicht der Zusammensetzung, einer oder mehrerer Verbindungen, gewählt aus der Gruppe bestehend aus einwertigen aromatischen Alkoholen, Terpenen, Terpenoiden, Guajacolen, Phenolen, Diphenolen, Cumarinen, Anthrachinonen, Flavonen, Flavonoiden und Mischungen davon.

3. Die Zusammensetzung gemäß Anspruch 1 oder Anspruch 2, worin die aliphatischen 1,3-Diole eine lineare Kette mit einer Länge zwischen 4 und 15 Kohlenstoffatomen haben.

4. Die Zusammensetzung gemäß einem beliebigen der obigen Ansprüche, worin die aliphatischen 1,2-Diole eine lineare Kette mit einer Länge zwischen 2 und 12 Kohlenstoffatomen haben.

5. Die Zusammensetzung gemäß einem beliebigen der obigen Ansprüche, worin die einen oder mehreren aliphatischen Diole oder Ester davon eine Mischung sind, die aus aliphatischen 1,3-Diolen oder Estern davon in einer Menge zwischen 80% und 90% und aliphatischen 1,2-Diolen oder Estern davon in einer Menge zwischen 10 und 20 Gewichtsprozent, basierend auf dem Gesamtgewicht der Mischung, besteht.

6. Die Zusammensetzung gemäß einem beliebigen der obigen Ansprüche, die 88 bis 95 Gewichtsprozent, basierend auf dem Gesamtgewicht der Zusammensetzung, der einen oder mehreren aliphatischen Diole oder Ester davon und 5 bis 12 Gewichtsprozent, basierend auf dem Gesamtgewicht der Zusammensetzung, der einen oder mehreren Verbindungen umfasst.

7. Verwendung der Zusammensetzung gemäß einem beliebigen der Ansprüche 1-6 zur Konservierung eines Nahrungsmittelprodukts durch Inkorporation der Zusammensetzung in das Nahrungsmittelprodukt in einer Menge zwischen 0,2 und 8 Gewichtsprozent des Endgewichts des Nahrungsmittelprodukts.

8. Die Verwendung gemäß Anspruch 7, wobei das Nahrungsmittelprodukt eine Restfeuchtigkeit (HU) zwischen 15% und 40% hat.

9. Die Verwendung gemäß Anspruch 7 oder Anspruch 8, wobei das Nahrungsmittelprodukt eine Wasseraktivität (AW) zwischen 0,60 und 0,98 hat.

10. Die Verwendung gemäß einem beliebigen der Ansprüche 7-9, wobei das Nahrungsmittelprodukt gewählt ist aus der Gruppe bestehend aus Mehlprodukten, vorzugsweise Backwaren, Produkten auf Getreidebasis, Polenta, Pizzateig, Focacciateig, Blätterteig, Mürbeteig, Süßwaren, Zuckersüßwaren, süßen Cremes, Marmeladen und Kompotten, geschnittenen Früchten und Gemüsen, essbaren Gelees, Sirupen mit Geschmack, frischer Pasta, gefüllter Pasta, Teigen, Füllungen, Käsesorten, Joghurts, salzigen Saucen, Produkten auf Fischbasis, Surrogaten von Fischereiprodukten, Emulsionen von Fetten, natürlichen Aromen.

11. Ein Lebensmittelprodukt, das die Zusammensetzung gemäß einem beliebigen der Ansprüche 1-6 umfasst.

## Revendications

1. Composition pour conserver des produits alimentaires, comportant :
(i) de 85 % à 97 % en poids du poids total de la composition d'un ou plusieurs diols aliphatiques ou esters de ceux-ci choisis parmi le groupe constitué de : diols 1,3 et un mélange de diols 1,3 et de diols 1,2, et
(ii) de 3 % à 15 % en poids du poids total de la composition d'un ou plusieurs composés choisis parmi le groupe constitué de : alcools aromatiques monohydriques, terpènes, terpénoïdes, guaïacols, phénols, diphénols, coumarines, anthraquinones, flavones, flavonoïdes, acides phénoliques et dérivés de ceux-ci, acides hydroxycinnamiques et dérivés de ceux-ci, et mélanges de ceux-ci.

2. Composition selon la revendication 1, comportant :
(i) de 85 % à 97 % en poids du poids total de la composition d'un ou plusieurs diols aliphatiques ou esters de ceux-ci choisis parmi le groupe constitué de : diols 1,3 et un mélange de diols 1,3 et de diols 1,2, et
(ii) de 3 % à 15 % en poids du poids total de la composition d'un ou plusieurs composés choisis parmi le groupe constitué de : alcools aromatiques monohydriques, terpènes, terpénoïdes, guaïacols, phénols, diphénols, coumarines, anthraquinones, flavones, flavonoïdes et mélanges de ceux-ci.

3. Composition selon la revendication 1 ou la revendication 2, dans laquelle lesdits diols aliphatiques 1,3 ont une chaîne linéaire avec une longueur comprise entre 4 et 15 atomes de carbone.

4. Composition selon l'une quelconque des revendications précédentes, dans laquelle lesdits diols aliphatiques 1,2 ont une chaîne linéaire ayant une longueur comprise entre 2 et 12 atomes de carbone.

5. Composition selon l'une quelconque des revendications précédentes, dans laquelle ledit ou lesdits diols aliphatiques ou esters de ceux-ci sont un mélange constitué de diols aliphatiques 1,3 ou d'esters de ceux-ci en une quantité comprise entre 80 % et 90 %, et de diols aliphatiques 1,2 ou d'esters de ceux-ci en une quantité comprise entre 10 % et 20 % en poids du poids total dudit mélange.

6. Composition selon l'une quelconque des revendications précédentes, comportant de 88 % à 95 % en poids du poids total de la composition dudit ou desdits diols aliphatiques ou esters de ceux-ci, et de 5 % à 12 % en poids du poids total de la composition dudit ou desdits composés.

7. Utilisation de la composition selon l'une quelconque des revendications 1 à 6 pour la conservation d'un produit alimentaire par incorporation de ladite composition dans le produit alimentaire en une quantité comprise entre 0,2 % et 8 % en poids du poids final du produit alimentaire.

8. Utilisation selon la revendication 7, dans laquelle le produit alimentaire a une humidité résiduelle (HU) comprise entre 15 % et 40 %.

9. Utilisation selon la revendication 7 ou la revendications 8, dans laquelle le produit alimentaire a une activité de l'eau (AW) comprise entre 0,60 et 0,98.

10. Utilisation selon l'une quelconque des revendications 7 à 9, dans laquelle le produit alimentaire est choisi parmi le groupe constitué de : produits farineux, de préférence produits de boulangerie, produits à base de céréales, polenta, pâte à pizza, pâte à focaccia, pâte feuilletée, pâte brisée au beurre, produits de confiserie, produits de confiserie sucrée, crème alimentaire sucrée, confitures, marmelades et compotes, fruits et légumes en morceaux, gelées de qualité alimentaire pour nappages, sirops aromatisés, pâtes fraîches, pâtes farcies, pâtes alimentaires, garnitures, fromages, yaourts, sauces salées, produits à base de poisson, succédanés de produits de la pêche, émulsions de graisses, arômes naturels.

11. Produit alimentaire comportant la composition selon l'une quelconque des revendications 1 à 6.
